# EUROPEAN PATENT SPECIFICATION

(11) **EP 1 880 362 B1**
(45) Date of publication and mention of the grant of the patent: **29.10.2008**
(21) Application number: 06727969.5
(22) Date of filing: 19.04.2006
(51) Int. Cl.: G06T 7/00

(54) **VIRTUAL LESION BASED QUANTIFICATION**
QUANTIFIZIERUG AUF BASIS VIRTUELLER LÄSIONEN
QUANTIFICATION A BASE DE LESION VIRTUELLE

(30) Priority: 03.05.2005 US 677172 P
(43) Date of publication of application: 23.01.2008
(73) Proprietor: Koninklijke Philips Electronics N.V., 5621 BA Eindhoven (NL); Philips Intellectual Property & Standards GmbH, 20099 Hamburg (DE)
(72) Inventor: BUSCH, Marc, 52064 Aachen (DE); BRINKS, Ralph, 58089 Hagen (DE)
(74) Representative: Schouten, Marcus Maria
(86) International application number: PCT/IB2006/051208
(87) International publication number: WO 2006/117706

(56) References cited:
- PHILIPPE ST-JEAN ET AL: "Automated Atlas Integration and Interactive Three- Dimensional Visualization Tools for Planning and Guidance in Functional Neurosurgery" IEEE TRANSACTIONS ON MEDICAL IMAGING, IEEE SERVICE CENTER, PISCATAWAY, NJ, US, vol. 17, no. 5, October 1998 (1998-10), XP011035783 ISSN: 0278-0062
- BORNIK ALEXANDER, BEICHEL REINHARD, REITINGER BERNHARD, GOTSCHULI G., SORANTIN E., LEBERL FRANZ, SONKA M.: "Computer Aided Liver Surgery Planning: An Augmented Reality Approach" PROCEEDINGS OF SPIE, MEDICAL IMAGING 2003: VISUALIZATION, IMAGE-GUIDED PROCEDURES, AND DISPLAY, vol. 5029, 15 February 2003 (2003-02-15), - 20 February 2003 (2003-02-20) pages 395-406, XP002393781

## Description

Reliable quantification of functional medical images, such as Positron Emission Tomography (PET), is becoming an increasingly important feature for the detection and treatment of medical abnormalities. A PET image is used to provide a clinician or physician information regarding the physiological condition of regions of interest (ROI).

The partial volume effect (PVE) in PET is a problem for quantitative tracer studies as it may lead to misinterpretation of the data collected. The partial volume effect results from the limited spatial resolution of the imaging device, and impairs the ability to distinguish between two points after image reconstruction. The limited resolution of a PET imaging system is the main reason for the PVE, which leads to a decrease of contrast and peak recovery for small objects. The partial volume effect is caused by spillover of radioactivity into neighboring regions and the underlying tissue inhomogeneity of the particular region. The partial volume effect results in a blurring of the data and difficulty in providing quantification of the data. For example, PVE can result in an underestimation of activity or standardized uptake value (SUV) for small lesions.

The two main strategies to solve this problem are voxel-based and region-based deconvolution. The latter, one example being the GTM method, needs additional anatomical information, e.g. from a co-registered CT image. However, this additional information might not always be available. Furthermore, inaccurate registration might introduce new artifacts that limit the benefit of the method. The GTM method therefore relies on accurate input (definition of regions of interest with homogeneous activity concentrations, manual correction of registration errors, etc.) by the clinician.

On the other hand, voxel-based deconvolution, e.g. the iterative RL method, requires no additional input from the clinician, and might therefore be easy to handle. However, the noisy nature of PET images makes deconvolution an ill-posed problem as it seldom produces satisfactory, quantitative results. Iterative algorithms with regularization are needed to prevent noise amplification, making it a time-consuming and error-prone procedure.

An image quantification system that allows comparing virtual lesions with real lesions is taught in IEEE Trans Med Im 17(5), Oct 1998, pp. 672-680, XA11035783.

The present invention is defined by the appended claims and is directed to a system and method for quantifying a region of interest in a medical image, and in particular in a PET image. The system and method allow the clinician to make real time quantitative analysis of a region of interest without requiring anatomical information from a CT image and without a complex iterative algorithm for regularization.

In one embodiment, the system and method are used to quantify small lesions within a region of interest. A set of virtual lesions can be generated and then visually compared to the actual lesion. Quantitative information, such as lesion size and tracer activity, or SUV, can be obtained to assist the clinician or physician in the diagnosis and treatment of the lesion.

In the accompanying drawings, which are incorporated in and constitute a part of this specification, embodiments of the invention are illustrated, which, together with a general description of the invention given above, and the detailed description given below serve to illustrate the principles of this invention. One skilled in the art should realize that these illustrative embodiments are not meant to limit the invention, but merely provide examples incorporating the principles of the invention.
Figure 1 illustrates a graphical user interface (GUI) that allows scanning through virtual lesions to determine the correct set of variables, such as size and activity.
Figure 2 illustrates the lesion shown in Figure 1 with a virtual lesion (not set to the correct parameters) activated in subtraction mode.
Figure 3 illustrates a set of images wherein the activity of the virtual lesion is chosen correctly and the size of the virtual lesion is set to 15 mm (left), 16 mm (middle), and 17 mm (right).
Figure 4 illustrates a set of images wherein the size of the virtual lesion is chosen correctly and the activity of the virtual lesion is set to (from left to right) 90%, 95%, 100%, 105%, and 110% of the correct value.
Figure 5 is a NEMA-IEC Phantom measurement, original (left), virtual lesion subtracted for 22mm sphere (center), and virtual lesion subtracted for 17mm sphere (right).
Figure 6 illustrates a lesion with a virtual lesion in overlay mode.

The system and method of quantitative analysis of PET images provided herein allows the clinician or physician to utilize his or her own knowledge and background to make real time comparisons to allow for quantification of lesions within the region of interest. This approach is particularly helpful in that it provides a quick and simple visual approach to solve quantitative problems, such as, for example, determination of lesion size or lesion SUV.

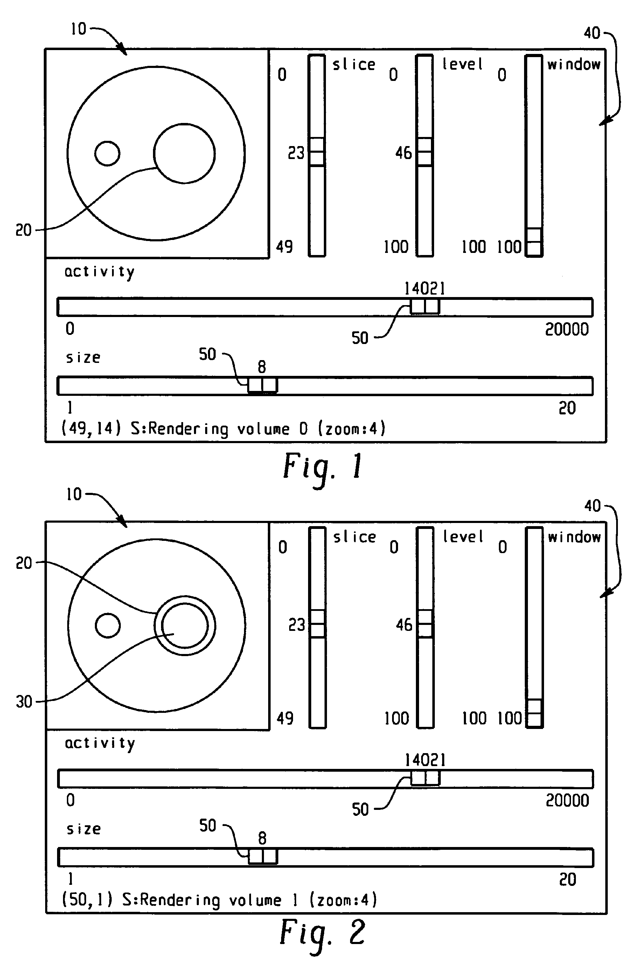

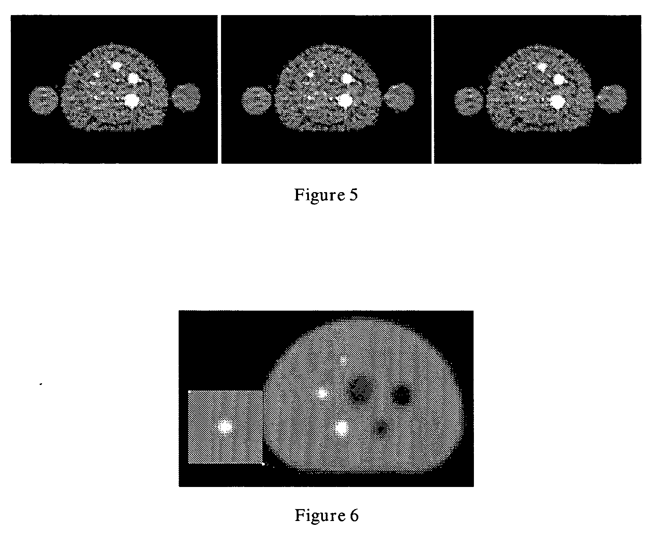

In one embodiment of the invention, the clinician can easily establish quantitative parameters for lesions, which appear as hot regions in PET images. Once the clinician identifies a lesion, the lesion is compared to a set of computed virtual lesions, which can vary in predetermined parameters such as, for example, size and activity. The clinician can quickly and easily adjust the virtual lesion parameters until the virtual lesion "matches" the lesion in the PET image. By "matching" the virtual lesion to the lesion in the PET image, it is meant that the virtual image and PET image lesion can be visually compared to determine whether the parameters of the virtual lesion are correctly chosen. For example, the virtual lesion may be displayed in subtraction mode or overlay mode. In subtraction mode, best shown in Figure 2, if the parameters of the virtual lesion are chosen correctly, the subtracted image will produce an image of the region of interest without the lesion. In overlay mode, best shown in Figure 6, the virtual lesion can be freely positioned over the PET image to determine the virtual lesion parameters. In either mode, it would generally be desirable to maintain the original PET image, and as such the subtracted image or overlay image may be produced as an alternative image or view.

One example of a method that implements the invention is as follows. Software is provided to the clinician that allows implementation of the method in an efficient manner. The software includes an algorithm for modeling the point spread function (PSF) from either simulations or phantom images. The point spread function is used to calculate the set of virtual lesions, as discussed in further detail below.

With reference to Figure 1, a PET image **10** is acquired for the region of interest that includes one or more lesions **20** to be quantified. The lesion(s) will appear as hot spots **20** in the PET image **10**. The clinician focuses on a particular lesion by selecting the lesion. This can be done, for example, by clicking on the hot spot **20** with a mouse cursor or other user input device. The clinician also provides the general geometrical shape of the desired virtual lesions. For example, spherical virtual lesions can be used for most PET oncology studies. Other predetermined shapes can also be used, such as, for example square, triangular or oval. In some cases, the clinician may want to define a particular geometric shape based upon the region of interest or the shape of the lesion or hot spot. The clinician may either enter the desired geometrical shape, or the software can default to a standard shape, such as spherical, which can later be changed if so desired.

Once the center of the hot spot **20** and the desired shape of the virtual lesion have been determined, the software uses the point spread function to calculate a number of simulated images, or virtual lesions, that vary in preselected parameters. For example, a set of virtual lesions can be created with varying sizes or activity. As a specific example, 20 virtual lesions **30** (see Figure 2) can be generated which vary in diameter in the range of 1 mm to 20 mm, in 1mm step increments. Generally, different virtual lesions do not need to be calculated to vary the activity of the virtual lesion, since the activity can be determined by multiplying by a factor. It should be obvious to one skilled in the art that additional parameters, such as noise characteristic, can also be incorporated in the point spread function, and thus determined by the virtual lesion, however such additional parameters are typically not needed and often merely complicate the process.

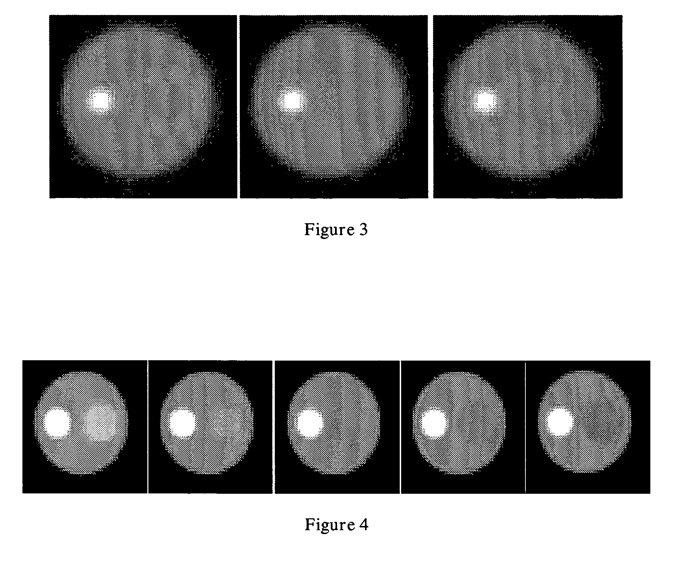

One of the virtual lesions **30** appears in a graphical user interface (GUI) **40**, which includes a set of sliders **50** for changing the parameters of the virtual lesion. Other means for changing the parameters of the virtual lesion **30** can also be used, such as, for example, numerical inputs or up/down arrows. The PET image **10** also appears in the GUI **40**. As mentioned above, the virtual lesion **30** can appear in subtraction mode, as shown in Figure 2, or in overlay mode, as shown in Figure 3. In subtraction mode, the virtual lesion is positioned at the center of the hot spot **20** and the virtual lesion parameters are changed until the hot spot disappears from the subtracted image. In overlay mode, the virtual lesion is produced in a separate window that can be freely moved until it covers the hot spot with the correct size and activity parameters. In either mode, the set of sliders **50** can be adjusted to the correct values to determine the correct virtual lesion parameters. While adjusting the slider to determine the correct virtual lesion size might appear to actually change the size of the virtual lesion **30**, the software is actually moving to the next size of virtual lesion generated in the set of virtual lesions. In this regard, movement of the size slider does not require recalculation of a virtual lesion. This provides a seamless display of information and does not require processing time.

The clinician can interactively change the parameters, e.g. radius and activity, of the virtual lesion while he observes the alternative view in real-time. The parameters are continually adjusted until the correct parameters are determined. The result is an accurate estimate of the lesion size as well as the lesion activity or SUV.

The Figures will now be discussed in further detail as they illustrate examples of the method discussed above. Figure 1 illustrates a cylindrical phantom with two spherical hot spots **20**. The spherical hot spots **20** appear blurred as a consequence of the limited resolution of the imaging system. Exact determination of activity and size is therefore difficult.

Figure 2 demonstrates the use of virtual lesions **30** to determine the activity and size of the hot spots **20**. The clinician has marked the large spherical hot spot **20** as the lesion of interest. In this case, the center of the hot spot **20** is automatically determined with sub-voxel accuracy. A set of virtual lesions **30** is calculated at the center position of the hot spot. One of the virtual lesions **30**, chosen randomly as the initial virtual lesion, isdisplayed. Figure 2 shows the virtual lesion in subtraction mode. The clinician will need to adjust the parameters of the virtual lesion **30** by moving the sliders **50** until the correct parameters are determined. In Figure 2, the selected value for the size of the virtual lesion **30** is too small. This can be seen in the Figure by the bright ring that surrounds the virtual lesion **30**. In addition, the selected value for the activity of the virtual lesion is chosen to large. This can be seen by noticing that the center of the virtual lesion **30** is too dark. The clinician will need to adjust the size and activity of the virtual lesion until the parameters are correct.

Figures 3 and 4 further illustrate how the parameters of the virtual lesion can be determined. In Figure 3, the activity of the virtual lesion has been properly selected and the size of the virtual lesion is varied to determine the correct value. In the image on the left, the size of the virtual lesion is set to 15 mm. In the middle image, the size of the virtual lesion is set to 16 mm. In the image on the right, the size of the virtual image is set to 17 mm. It can be seen that the correct value for the size of the virtual lesion is 16 mm. In the image on the left, the virtual lesion is too small as evidenced by the bright ring around the virtual lesion. In the image of the right, the virtual lesion is too large as evidenced by the dark ring around the virtual lesion.

In Figure 4, the size of the virtual lesion has been properly selected and the activity of the virtual lesion is varied to determine the correct value. The activity of the virtual lesion is set to, from left to right, 90%, 95%, 100%, 105%, and 110% of the correct value. The two images on the left are below the correct value of the activity of the virtual lesion as evidenced by the relative brightness of the virtual lesion. The two images on the right are above the correct valve of the activity of the virtual lesion as evidenced by the relative darkness of the virtual lesion.

The examples shown in Figures 3 and 4 demonstrate fairly simple images, that are so simple that the whole process of parameter adaptation could be easily automated. However, in a real clinical application, the images are much more complicated. As shown in Figure 5, PET images are typically noisy and may include all kinds of anatomy that is hard to handle correctly with a fully automated algorithm. But for the clinician, it still is a simple task to adapt the parameters interactively and find the correct set of parameters. This is because the clinician has a great deal of knowledge of the images and can relatively easily determine the correct parameters of the virtual lesion.

The method described herein allows for a clinician to quickly and easily determine the parameter values of a virtual lesion, which in turn translate into the physical characteristics of the actual lesion. The speed and accuracy in which the clinician can determine the activity, or SUV, and size of a lesion are dramatically improved over conventional techniques. This is especially true for the notoriously problematic case of small lesions that show a bad contrast recovery due to the limited resolution of the imaging system.

It should be noted that variations of the method discussed above can also be implemented. For example, the parameter determination process, or a portion thereof, can be automated. For instance, the radius of the virtual lesion might be manually determined through an interactive iterative process, while the activity of the virtual lesion is determined with a real-time optimization algorithm. The process can also be modified to account for other effects besides spatial resolution. For example, the point spread function could also account for other parameters, such as noise in the PET image. Furthermore, the method is not intended to be limited to quantification of PET images, but may also be employed in other medical imaging systems, such as SPECT.

The invention is also directed to a system for quantitative analysis of medical images, and has particular application in PET imaging systems. The system employs standard imaging equipment, including one or more detectors, a gantry and a patient table. The system also includes a source of radioactivity that is used to produce an image and a software system for receiving and processing data and producing an image of the source. It should be noted that other imaging systems can be used and that the system described herein is not meant to be limiting.

The system further includes an image quantification improvement component. This component is generally comprised of a software package, which can be incorporated into the standard image acquisition and region of interest software or can be separately implemented. The image quantification improvement software includes a model of the point spread function of the imaging system. Data provided from simulations or phantom images can be used to develop a model of the point spread function. The algorithm is then used to generate a set of virtual lesions once a clinician provides a PET image with a selected region of interest. The set of virtual images generated can be stored in a permanent memory source, or more preferably, in a temporary memory source that can be overwritten when the next set of virtual lesions is generated.

The system further includes a graphical user interface **40**, such as the one shown in Figures 1 and 2. One skilled in the art should appreciate that the graphical user interface shown in the Figures is merely an illustrative example and that other graphical user interfaces can be used. It is desirable to provide a graphical user interface that provides the data and images in an organized and easily understandable manner and also allows for easy and quick manipulation of one or more parameters. As shown in Figures 1 and 2, the graphical user interface **40** includes a combined image, here shown in subtraction mode, of the PET image **10** and virtual lesion **30** and a set of parameter sliders **50** for adjustment of the virtual lesion parameters. The graphical user interface **40** may also show an unaltered view of the PET image and may show the virtual lesion in overlay mode. By moving the sliders **50**, or otherwise changing the value of the parameters, the image quantification improvement software either generates a different virtual lesion from the set virtual lesion images at the region of interest or multiplies the current virtual lesion by a factor, thereby changing a parameter, such as activity of the virtual lesion. In either case, manipulation of the sliders **50** allows the clinician to visually compare virtual lesions with different parameters to the actual lesion shown in the PET image. This allows the clinician to determine the correct values of the parameters of the virtual lesion, which in turn provides the physical characteristics of the actual lesion. The system may optionally include a memory source to save the finalized combined image or virtual lesion parameter data or an output source, such as a printer for printing the finalized combined image of virtual lesion parameter data.

The invention has been described with reference to one or more preferred embodiments. Clearly, modifications and alterations will occur to other upon a reading and understanding of this specification. It is intended to include all such modifications and alterations insofar as they come within the scope of the appended claims or equivalents thereof.

## Claims

1. A system adapted to provide quantitative analysis of medical images, the system comprising:
a) an imaging system for acquiring a medical image (10), said medical image (10) including at least one actual lesion (20); and
b) an image quantification component comprising:
i) a model of the point spread function of said imaging system, said model being used to automatically generate, at a user selected region of interest in the medical image (10), the visual appearance of a set of simulated virtual lesions (30) that differ in the value of at least one corresponding lesion parameter,
ii) a graphical user interface (40) for displaying a virtual lesion selected from said set of virtual lesions to provide a visual comparison of said medical image (10) including said at least one actual lesion (20) with said virtual lesion (30), said graphical user interface (40) including one or more mechanisms (50) to interactively adjust said at least one parameter to change which of said virtual lesions (30) can be visually compared to the medical image (10), such that at least one physical characteristic of the actual lesion is obtainable from said at least one parameter of the visually matching virtual lesion.

2. The system of claim 1, wherein said medical image **(10)** is a PET image.

3. The system of claim 1, wherein at least one of said parameter adjustment mechanisms **(50)** selects a different virtual lesion **(30)** from said set of virtual lesions **(30)** upon manipulation.

4. The system of claim 1, wherein at least one of said parameter adjustment mechanisms **(50)** changes the virtual lesion **(30)** by a factor upon manipulation.

5. The system of claim 1, wherein said set of virtual lesions **(30)** comprises virtual lesions **(30)** of different sizes each differing by an incremental value.

6. The system of claim 1, wherein said visual comparison of the medical image **(10)** with the virtual lesion **(30)** is a subtracted view.

7. The system of claim 1, wherein said visual comparison of the medical image **(10)** with the virtual lesion **(30)** is an overlay view.

8. The system of claim 1, wherein said system for generating a medical image **(10)** comprises one or more detectors, a gantry, a patient table and a source including a radioactive element.

9. An image quantification component adapted to provide quantitative analysis of a medical image (10) acquired by an imaging system and including at least one actual lesion (20), said component comprising:
i) a model of the point spread function of said imaging system, said model being used to automatically generate, at a user selected region of interest in the medical image(10), the visual appearance of a set of simulated virtual lesions (30) that differ in the value of at least one corresponding lesion parameter,
ii) a graphical user interface (40) for displaying a virtual lesion selected from said set of virtual lesions to provide a visual comparison of said medical image (10) including said at least one actual lesion (20) with said virtual lesion (30), said graphical user interface (40) including one or more mechanisms (50) to interactively adjust said at least one parameter to change which of said virtual lesions (30) can be visually compared to the medical image (10), such that at least one physical characteristic of the actual lesion is obtainable from said at least one parameter of the visually matching virtual lesion.

10. The component of claim 9, wherein said medical image **(10)** is a PET image.

11. The component of claim 9, wherein at least one of said parameter adjustment mechanisms **(50)** selects a different virtual lesion **(30)** from said set of virtual lesions **(30)** upon manipulation.

12. The component of claim 9, wherein at least one of said parameter adjustment mechanisms **(50)** changes the virtual lesion **(30)** by a factor upon manipulation.

13. The component of claim 9, wherein said set of virtual lesions **(30)** comprises virtual lesions **(30)** of different sizes each differing by an incremental value.

14. The component of claim 9, wherein said visual comparison of the medical image **(10)** with the virtual lesion **(30)** is a subtracted view.

15. The component of claim 9, wherein said visual comparison of the medical image **(10)** with the virtual lesion **(30)** is an overlay view.

16. A method of quantitative analysis of medical images (10), said method comprising the steps of:
- using an imaging system to acquire a medical image (10) including at least one actual lesion (20),
- deriving a model of the point spread function of said imaging system based on a set of simulations or phantom images,
- determining a region of interest within the medical image (10);
- using said model to automatically generate, at said user selected region of interest in the medical image (10), the visual appearance of a set of virtual lesions (30) that differ in the value of at least one corresponding lesion parameter,
- generating a comparative view of said medical image (10) including said at least one actual lesion (20), and a virtual lesion (30) selected from said set of virtual lesions (30),
- receiving user input to manipulate said one or more virtual lesion parameters to change the virtual lesion (30) in the comparative view;
- translating said one or more virtual lesion parameters of a visually matching virtual lesion into physical characteristics of said at least one actual lesion.

17. The method of claim 16, wherein the step of manipulating one or more virtual lesion parameters to change the virtual lesion **(30)** further comprises selecting a different virtual lesion **(30)** from said set of virtual lesions **(30)** upon manipulation of at least one of said one or more virtual lesion parameters.

18. The method of claim 16, wherein the step of generating a comparative view comprises generating a comparative view in subtraction mode.

19. The method of claim 16, wherein the step of generating a comparative view comprises generating a comparative view in overlay mode.

20. The method of claim 16, wherein said set of virtual lesions **(30)** comprises virtual lesions **(30)** of different sizes each differing by an incremental value.

## Patentansprüche

1. System zur Schaffung einer quantitativen Analyse medizinischer Bilder, wobei das System Folgendes umfasst:
a) ein Bildgebungssystem zum Erfassen eines medizinischen Bildes (10), wobei das genannte medizinische Bild (10) mindestens eine tatsächliche Läsion (20) enthält; und
b) eine Bildquantifizierungskomponente, die Folgendes umfasst:
i) ein Modell der Punktspreizfunktion des genannten Bildgebungssystems, wobei das genannte Modell verwendet wird, um automatisch bei einer vom Benutzer ausgewählten interessierenden Region im medizinischen Bild (10) das visuelle Erscheinen einer Gruppe simulierter virtueller Läsionen (30) zu erzeugen, die im Wert von mindestens einem entsprechenden Läsionsparameter abweichen,
ii) eine graphische Benutzeroberfläche (40) zum Anzeigen einer aus der genannten Gruppe von virtuellen Läsionen ausgewählten virtuellen Läsion, um einen visuellen Vergleich des genannten medizinischen Bildes (10), das die genannte mindestens eine tatsächliche Läsion (20) enthält, mit der virtuellen Läsion (30) zu schaffen, wobei die genannte graphische Benutzeroberfläche (40) einen oder mehrere Mechanismen (50) umfasst, um den genannten mindestens einen Parameter interaktiv anzupassen, um zu verändern, welche der genannten virtuellen Läsionen (30) visuell mit dem medizinischen Bild (10) verglichen werden kann, so dass man mindestens eine physikalische Eigenschaft der tatsächlichen Läsion aus dem genannten mindestens einen Parameter der visuell übereinstimmenden virtuellen Läsion gewinnen kann.

2. System nach Anspruch 1, wobei das genannte medizinische Bild (10) ein PET-Bild ist.

3. System nach Anspruch 1, wobei mindestens einer der genannten Parameteranpassungsmechanismen (50) bei Betätigung eine andere visuelle Läsion (30) aus der genannten Gruppe der virtuellen Läsionen (30) auswählt.

4. System nach Anspruch 1, wobei mindestens einer der genannten Parameteranpassungsmechanismen (50) die virtuelle Läsion (30) bei Betätigung um einen Faktor verändert.

5. System nach Anspruch 1, wobei die genannte Gruppe von virtuellen Läsionen (30) virtuelle Läsionen (30) unterschiedlicher Größe umfasst, die sich jeweils um einen inkrementellen Wert unterscheiden.

6. System nach Anspruch 1, wobei der genannte visuelle Vergleich des medizinischen Bildes (10) mit der virtuellen Läsion (30) eine subtrahierte Ansicht ist.

7. System nach Anspruch 1, wobei der genannte visuelle Vergleich des medizinischen Bildes (10) mit der virtuellen Läsion (30) eine Überlagerungsansicht ist.

8. System nach Anspruch 1, wobei das genannte System zum Erzeugen eines medizinischen Bildes (10) einen oder mehrere Detektoren, eine Gantry, einen Patiententisch und eine Quelle mit einem radioaktiven Element umfasst.

9. Bildquantifizierungskomponente, dafür vorgesehen, eine quantitative Analyse eines medizinischen Bildes (10) zu schaffen, das durch ein Bildgebungssystem erfasst wurde und mindestens eine tatsächliche Läsion (20) enthält, wobei die genannte Komponente Folgendes umfasst:
i) ein Modell der Punktspreizfunktion des genannten Bildgebungssystems, wobei das genannte Modell verwendet wird, um automatisch bei einer vom Benutzer ausgewählten interessierenden Region im medizinischen Bild (10) das visuelle Erscheinen einer Gruppe simulierter virtueller Läsionen (30) zu erzeugen, die im Wert von mindestens einem entsprechenden Läsionsparameter abweichen,
ii) eine graphische Benutzeroberfläche (40) zum Anzeigen einer aus der genannten Gruppe von virtuellen Läsionen ausgewählten virtuellen Läsion, um einen visuellen Vergleich des genannten medizinischen Bildes (10), das die genannte mindestens eine tatsächliche Läsion (20) enthält, mit der virtuellen Läsion (30) zu schaffen, wobei die genannte graphische Benutzeroberfläche (40) einen oder mehrere Mechanismen (50) umfasst, um den genannten mindestens einen Parameter interaktiv anzupassen, um zu verändern, welche der genannten virtuellen Läsionen (30) visuell mit dem medizinischen Bild (10) verglichen werden kann, so dass man mindestens eine physikalische Eigenschaft der tatsächlichen Läsion aus dem genannten mindestens einen Parameter der visuell übereinstimmenden virtuellen Läsion gewinnen kann.

10. Komponente nach Anspruch 9, wobei das genannte medizinische Bild (10) ein PET-Bild ist.

11. Komponente nach Anspruch 9, wobei mindestens einer der genannten Parameteranpassungsmechanismen (50) bei Betätigung eine andere virtuelle Läsion (30) aus der genannten Gruppe der virtuellen Läsionen (30) auswählt.

12. Komponente nach Anspruch 9, wobei mindestens einer der genannten Parameteranpassungsmechanismen (50) die virtuelle Läsion (30) bei Betätigung um einen Faktor verändert.

13. Komponente nach Anspruch 9, wobei die genannte Gruppe von virtuellen Läsionen (30) virtuelle Versionen (30) unterschiedlicher Größe umfasst, die sich jeweils um einen inkrementellen Wert unterscheiden.

14. Komponente nach Anspruch 9, wobei der genannte visuelle Vergleich des medizinischen Bildes (10) mit der virtuellen Läsion (30) eine subtrahierte Ansicht ist.

15. Komponente nach Anspruch 9, wobei der genannte visuelle Vergleich des medizinischen Bildes (10) mit der virtuellen Läsion (30) eine Überlagerungsansicht ist.

16. Verfahren der quantitativen Analyse von medizinischen Bildern (10), wobei das genannte Verfahren die folgenden Schritte umfasst:
- Verwenden eines Bildgebungssystems zum Erfassen eines medizinischen Bildes (10), das mindestens eine tatsächliche Läsion (20) enthält,
- Ableiten eines Modells der Punktspreizfunktion des genannten Bildgebungssystems basierend auf einer Gruppe von Simulationen oder Phantombildern,
- Bestimmen einer interessierenden Region in dem medizinischen Bild (10);
- Verwenden des genannten Modells, um automatisch bei einer vom Benutzer ausgewählten interessierenden Region im medizinischen Bild (10) das visuelle Erscheinen einer Gruppe virtueller Läsionen (30) zu erzeugen, die im Wert von mindestens einem entsprechenden Läsionsparameter abweichen,
- Erzeugen einer Ansicht zum Vergleich des genannten medizinischen Bildes (10), das die genannte mindestens eine tatsächliche Läsion (20) enthält, mit einer virtuellen Läsion (30), die aus der genannten Gruppe der virtuellen Läsionen (30) ausgewählt wurde,
- Empfangen von Benutzereingaben zum Verändern des genannten einen Parameters oder der genannten mehreren Parameter der virtuellen Läsion, um die virtuelle Läsion (30) in der Vergleichsansicht zu verändern;
- Umsetzen des genannten einen Parameters oder der genannten mehreren Parameter der virtuellen Version einer visuell übereinstimmenden virtuellen Läsion in physikalische Eigenschaften der genannten mindestens einen tatsächlichen Läsion.

17. Verfahren nach Anspruch 16, wobei der Schritt des Beeinflussens von einem oder mehreren Parametern der virtuellen Läsion zum Verändern der virtuellen Läsion (30) weiterhin das Auswählen einer verschiedenen virtuellen Läsion (30) aus der genannten Gruppe von virtuellen Läsionen (30) auf die Beeinflussung von mindestens einem der genannten einen oder mehreren Parameter der virtuellen Läsion hin umfasst.

18. Verfahren nach Anspruch 16, wobei der Schritt des Erzeugens einer Vergleichsansicht das Erzeugen einer Vergleichsansicht im Subtraktionsmodus umfasst.

19. Verfahren nach Anspruch 16, wobei der Schritt des Erzeugens einer Vergleichsansicht das Erzeugen einer Vergleichsansicht im Überlagerungsmodus umfasst.

20. Verfahren nach Anspruch 16, wobei die genannte Gruppe von virtuellen Läsionen (30) virtuelle Läsionen (30) von unterschiedlicher Größe umfasst, die sich jeweils um einen inkrementellen Wert unterscheiden.

## Revendications

1. Système adapté pour fournir une analyse quantitative d'images médicales, le système comprenant :
a) un système d'imagerie pour acquérir une image médicale (10), ladite image médicale (10) comprenant au moins une lésion réelle (20) ; et
b) un composant de quantification d'image comprenant :
i) un modèle de la fonction d'étalement du point dudit système d'imagerie, ledit modèle étant utilisé pour générer automatiquement, dans une région d'intérêt choisie par l'utilisateur dans l'image médicale (10), l'aspect visuel d'un ensemble de lésions virtuelles simulées (30) qui diffèrent par la valeur d'au moins un paramètre de lésion correspondant,
ii) une interface d'utilisateur graphique (40) pour afficher une lésion virtuelle choisie parmi ledit ensemble de lésions virtuelles pour effectuer une comparaison visuelle de ladite image médicale (10) comprenant la au moins une lésion réelle (20) avec ladite lésion virtuelle (30), ladite interface d'utilisateur graphique (40) comprenant un ou plusieurs mécanismes (50) pour ajuster de manière interactive ledit au moins un paramètre pour changer celle desdites lésions virtuelles (30) qui peut être visuellement comparée à l'image médicale (10) de sorte qu'au moins une caractéristique physique de la lésion réelle puisse être obtenue à partir dudit au moins un paramètre de la lésion virtuelle concordant visuellement.

2. Système selon la revendication 1, dans lequel ladite image médicale (10) est une image PET.

3. Système selon la revendication 1, dans lequel au moins l'un desdits mécanismes d'ajustement de paramètres (50) choisit une lésion virtuelle différente dans ledit ensemble de lésions virtuelles (30) par manipulation.

4. Système selon la revendication 1, dans lequel au moins l'un des mécanismes d'ajustement de paramètres (50) change la lésion virtuelle (30) d'un certain facteur par manipulation.

5. Système selon la revendication 1, dans lequel ledit ensemble de lésions virtuelles (30) comprend des lésions virtuelles (30) de différentes tailles, chacune différant d'une valeur incrémentale.

6. Système selon la revendication 1, dans lequel ladite comparaison visuelle de l'image médicale (10) avec la lésion virtuelle (30) est une vue soustraite.

7. Système selon la revendication 1, dans lequel ladite comparaison visuelle de l'image médicale (10) avec la lésion virtuelle (30) est une vue superposée.

8. Système selon la revendication 1, dans lequel ledit système pour générer une image médicale (10) comprend un ou plusieurs détecteurs, un portique, une table de patient et une source comprenant un élément radioactif.

9. Composante de quantification d'image adaptée pour fournir une analyse quantitative d'une image médicale (10) acquise par un système d'imagerie et comprenant au moins une lésion réelle (20), ladite composante comprenant :
i) un modèle de la fonction d'étalement du point dudit système d'imagerie, ledit modèle étant utilisé pour générer automatiquement, dans une région d'intérêt choisie par l'utilisateur de l'image médicale (10), l'aspect visuel d'un ensemble de lésions virtuelles simulées (30) qui diffèrent par la valeur d'au moins un paramètre de lésion correspondant,
ii) une interface d'utilisateur graphique (40) pour afficher une lésion virtuelle choisie dans ledit ensemble de lésions virtuelles pour fournir une comparaison visuelle de ladite image médicale (10) comprenant ladite au moins une lésion réelle (20) avec ladite lésion virtuelle (30), ladite interface d'utilisateur graphique (40) comprenant un ou plusieurs mécanismes (50) pour ajuster de manière interactive ledit au moins un paramètre afin de changer celle desdites lésions virtuelles (30) qui peut être visuellement comparée à l'image médicale (10), de sorte qu'au moins une caractéristique physique de la lésion réelle puisse être obtenue à partir dudit au moins un paramètre de la lésion virtuelle concordant visuellement.

10. Composante selon la revendication 9, dans laquelle ladite image médicale (10) est une image PET.

11. Composante selon la revendication 9, dans laquelle au moins l'un desdits mécanismes d'ajustement de paramètres (50) choisit une lésion virtuelle (30) différente de celle dudit ensemble de lésions virtuelles (30) par manipulation.

12. Composante selon la revendication 9, dans laquelle au moins l'un desdits mécanismes d'ajustement de paramètres (50) change la lésion virtuelle (30) d'un certain facteur par manipulation.

13. Composante selon la revendication 9, dans laquelle ledit ensemble de lésions virtuelles (30) comprend des lésions virtuelles (30) de différentes tailles, chacune différant d'une valeur incrémentale.

14. Composante selon la revendication 9, dans laquelle ladite comparaison visuelle de l'image médicale (10) avec la lésion virtuelle (30) est une vue soustraite.

15. Composante selon la revendication 9, dans laquelle ladite comparaison visuelle de l'image médicale (10) avec la lésion virtuelle (30) est une image superposée.

16. Procédé d'analyse quantitative d'images médicales (10), ledit procédé comprenant les étapes suivantes :
- on utilise un système d'imagerie pour acquérir une image médicale (10) comprenant au moins une lésion réelle (20),
- on déduit un modèle de la fonction d'étalement du point dudit système d'imagerie sur la base d'un ensemble de simulations ou d'images fantômes,
- on détermine une région d'intérêt dans l'image médicale (10),
- on utilise ledit modèle pour générer automatiquement, dans ladite région d'intérêt choisie par l'utilisateur de l'image médicale (10), l'aspect visuel d'un ensemble de lésions virtuelles (30) qui diffèrent par la valeur d'au moins un paramètre de lésion correspondant,
- on génère une vue comparative de ladite image médicale (10) comprenant ladite au moins une lésion réelle (20) avec une lésion virtuelle (30) choisie parmi ledit ensemble de lésions virtuelles (30),
- on reçoit l'entrée utilisateur pour manipuler lesdits un ou plusieurs paramètres de lésions virtuelles pour modifier la lésion virtuelle (30) dans la vue comparative ; et
- on traduit lesdits un ou plusieurs paramètres de lésion virtuelle d'une lésion virtuelle concordant visuellement en caractéristiques physiques de ladite au moins une lésion réelle.

17. Procédé selon la revendication 16, dans lequel l'étape de manipulation d'un ou plusieurs paramètres de lésion virtuelle pour changer la lésion virtuelle (30) comprend par ailleurs le choix d'une lésion virtuelle différente (30) dans ledit ensemble de lésions virtuelles (30) par manipulation d'au moins un desdits un ou plusieurs paramètres de lésion virtuelle.

18. Procédé selon la revendication 16, dans lequel l'étape de génération d'une vue comparative comprend la génération d'une vue comparative en mode soustractif.

19. Procédé selon la revendication 16, dans lequel l'étape de génération d'une vue comparative comprend la génération d'une vue comparative en mode superposé.

20. Procédé selon la revendication 16, dans lequel ledit ensemble de lésions virtuelles (30) comprend des lésions virtuelles (30) de différentes tailles, chacune différant d'une valeur incrémentale.
